# FASCICULE DE BREVET EUROPEEN

(11) **EP 2 536 291 B1**
(45) Date de publication et mention de la délivrance du brevet: **19.08.2015**
(21) Numéro de dépôt: 11704600.3
(22) Date de dépôt: 15.02.2011
(51) Int. Cl.: A23C 9/12

(54) **YAOURTIERE MENAGERE ET PROCEDE DE FABRICATION RAPIDE DE YAOURT**
JOGHURTZUBEREITER FÜR DEN HAUSHALT UND VERFAHREN FÜR DIE SCHNELLE ZUBEREITUNG VON JOGHURT
HOME YOGURT MAKER AND METHOD FOR THE QUICK PREPARATION OF YOGURT

(30) Priorité: 16.02.2010 FR 1051089
(43) Date de publication de la demande: 26.12.2012
(73) Titulaire: SEB S.A., 69130 Ecully (FR)
(72) Inventeur: PERRIER, Matthieu, F-26000 Valence (FR); RAUDE, Christian, F-64160 Buros (FR); ROUCHES, Alexandre, F-65310 Horgues (FR); CHARLES, Patrick, F-65290 Louey (FR); LACOURPAILLE, Gérard, F-65380 Ossun (FR)
(74) Mandataire: Cémeli, Eric Philippe Laurent
(86) Numéro de dépôt international: PCT/EP2011/052163
(87) Numéro de publication internationale: WO 2011/101320

(56) Documents cités:
- DE-B1- 2 521 808
- FR-A- 1 089 213
- FR-A1- 2 409 734
- US-A- 1 582 113
- US-A- 3 111 574
- US-A- 4 009 368
- anonymus: "Yogurtmet Yogurt Maker", , 13 septembre 2009 (2009-09-13), XP002600274, Extrait de l'Internet: URL:http://youryogurtmaker.blogspot.com/20 09/03/yogourmet-yogurt-maker.html [extrait le 2010-09-13]
- ANONYMOUS: "Yogurtmet electric multi yogurt makerYogurtmet electric multi yogurt maker", , 2009, pages 1-4, XP002608002, Extrait de l'Internet: URL:http://www.healthgoods.com/Yogourmet_E lectric_Multi_Yogurt_Maker_p/vmc-104.htm [extrait le 2010-09-13]

## Description

La présente invention se rapporte à un procédé de fabrication d'un yaourt, particulièrement adapté à une yaourtière ménagère électrique. Elle porte aussi sur une yaourtière ménagère électrique mettant en oeuvre un tel procédé.

Une yaourtière ménagère classique comprend un volume dans lequel sont disposés des pots comprenant une préparation à base de lait et de ferments, et un moyen de chauffe permettant de porter cette préparation à une température prédéfinie à laquelle elle se transforme en yaourt au bout d'un certain temps. Une première famille de yaourtières existantes repose sur le chauffage de la préparation en utilisant un composant chauffant agencé dans de la paraffine.

Ainsi, le document US4009368 A (FAIVRE ANDRE ET.AL, 22-02-1977) divulgue une méthode de fabrication du yaourt consistant à placer les pots dans une enceinte en contact avec un réservoir fermé contenant de la paraffine, et à chauffer la paraffine pour la faire fondre et élever la température des pots placés dans l'enceinte.

Par ailleurs, US 3 111 574 A (GIACOMO SPINI, 19-11-1963) divulgue une méthode dans laquelle un liquide est placé dans l'enceinte et chauffé par une résistance, le pot étant chauffé directement par le liquide.

Une seconde famille de yaourtières existantes repose sur le chauffage de la préparation en utilisant un élément chauffant de faible puissance agencé dans l'air ou contre le fond d'une cuve. Dans les deux cas, le moyen chauffant permet de chauffer progressivement l'air du volume dans lequel se trouve la préparation. L'inconvénient majeur de ces solutions existantes provient du fait qu'elles nécessitent un temps de fabrication très élevé, de l'ordre de huit heures en moyenne. Le procédé de fabrication mis en oeuvre comprend en effet en général une première phase de montée en température d'environ une à quatre heures durant laquelle la préparation est progressivement portée à une température comprise entre 40 et 50°C, puis une seconde phase de maintien ou de décroissance de la température, d'environ quatre heures. Une telle durée d'un cycle de fabrication de yaourts permet difficilement au consommateur de fabriquer le jour même le yaourt qu'il souhaite consommer. Il met en général la yaourtière en route le soir et récupère les yaourts fabriqués le matin, le cycle se déroulant la nuit pendant son sommeil. Les yaourtières existantes exigent donc à l'utilisateur d'anticiper au moins la veille la consommation souhaitée le lendemain. De plus, cette approche n'est pas flexible, ne permet pas d'intervenir au cours de la fabrication pour surveiller la yaourtière, effectuer des réglages, raccourcir la durée du cycle, etc.

Ainsi, le but de l'invention est de fournir une solution de fabrication de yaourt ne comprenant pas les inconvénients des solutions existantes.

Le concept de l'invention repose sur un moyen chauffant particulièrement efficace permettant la mise en oeuvre d'un procédé de fabrication beaucoup plus rapide.

L'invention concerne ainsi un procédé de fabrication de yaourt à partir d'un pot contenant une préparation à base de lait, comprenant une étape de chauffage du pot agencé au moins partiellement dans une enceinte, du fait que l'étape de chauffage du pot comprend une première phase de durée inférieure ou égale à trente minutes consistant à chauffer un liquide disposé dans l'enceinte à proximité du pot de sorte à porter la température de ladite préparation à base de lait dans un intervalle de température de fabrication de yaourt. La chauffe du liquide permet une élévation de température plus progressive et plus homogène que la chauffe d'un pot par contact ou par convection gazeuse directe. Des moyens de chauffe plus puissants peuvent ainsi être utilisés, tout en conservant une élévation de la température de ladite préparation suffisamment homogène. Avantageusement, ladite première phase présente une durée inférieure ou égale à dix minutes.

Selon l'invention, ledit procédé consiste à agencer le pot à distance du liquide, ladite première phase consistant à élever la température d'un fluide gazeux au contact du pot en chauffant ledit liquide. Par rapport à un pot agencé dans le liquide, le fluide gazeux permet de réaliser un frein thermique entre le liquide et le pot, ce qui favorise encore davantage l'obtention d'une température homogène dans le pot, et permet d'éviter la surchauffe de la préparation.

Alors, selon un premier mode d'exécution, la première phase consiste en l'évaporation dans l'enceinte d'une quantité d'eau prédéfinie et en une circulation de la vapeur obtenue autour du pot. La vapeur permet d'obtenir un transfert thermique particulièrement efficace et homogène avec les pots, la quantité d'eau prédéfinie permettant de contrôler la température atteinte dans l'enceinte.

Alors, selon un second mode d'exécution, la première phase consiste en un chauffage intensif d'un bain de liquide disposé dans l'enceinte jusqu'à une température supérieure à 50°C mais inférieure à la température d'évaporation dudit liquide. L'utilisation d'un bain de liquide, avantageusement un bain d'eau, porté à une température supérieure à la température nécessaire pour la fabrication de yaourt permet d'obtenir une masse thermique chaude importante, qui diffuse progressivement les calories issues des moyens de chauffe. Un transfert thermique progressif efficace et homogène peut ainsi être obtenu.

En alternative, selon un troisième mode d'exécution, ledit procédé consiste à agencer le pot au moins partiellement dans un bain de liquide disposé dans l'enceinte, ladite première phase consistant à élever la température du liquide en chauffant ledit liquide jusqu'à ce que la température du liquide atteigne l'intervalle de température de fabrication de yaourt.

Avantageusement, ledit procédé comprend une seconde phase de durée inférieure ou égale à quatre heures de régulation de la température de la préparation à base de lait dans l'intervalle de température de fabrication de yaourt. En d'autres termes, la température de la préparation à base de lait est maintenue dans l'intervalle de température de fabrication de yaourt par des apports thermiques, discontinus ou non. Ces apports thermiques peuvent notamment être réalisés en utilisant une puissance de chauffe réduite par rapport à la première phase, et/ou en utilisation séquentiellement une puissance de chauffe qui peut être identique à la puissance de chauffe de la première phase. Par rapport à une montée en température plus progressive et/ou par rapport à un refroidissement naturel plus rapide, cette disposition permet d'améliorer la qualité des yaourts tout en réduisant la durée d'obtention. Si désiré, l'utilisation d'un moyen chauffant additionnel pourrait être envisagée. En alternative ou en complément, l'isolation thermique de l'enceinte pourrait être renforcée, de manière à limiter les pertes thermiques.

Avantageusement, l'intervalle de température de fabrication de yaourt est compris entre 37 et 52°C, et de préférence entre 40 et 50°C.

L'invention concerne aussi une yaourtière ménagère électrique comportant au moins un emplacement pour un pot contenant une préparation à base de lait, et un moyen chauffant, ledit pot étant agencé au moins partiellement dans une enceinte, du fait que ladite yaourtière ménagère électrique comprend un réservoir pour recevoir un liquide, ce réservoir communiquant avec l'enceinte, et le moyen chauffant étant apte à transmettre une puissance de chauffe au liquide permettant par transfert thermique de monter la température de ladite préparation à base de lait dans un intervalle de température de fabrication de yaourt en une durée inférieure ou égale à trente minutes. Ces dispositions permettent de réduire le temps nécessaire à la fabrication des yaourts dans une yaourtière ménagère électrique. Avantageusement, le moyen chauffant est apte à transmettre une puissance de chauffe au liquide permettant par transfert thermique de monter la température de ladite préparation dans un intervalle de température de fabrication de yaourt en une durée inférieure ou égale à dix minutes.

Selon une caractéristique avantageuse, la yaourtière ménagère électrique comporte un panier comprenant ledit au moins un emplacement. Cette disposition facilite la mise en place et le retrait du pot, et présente un intérêt particulier lorsque la yaourtière comporte plusieurs pots.

Alors, selon une forme de réalisation, le panier est agencé à l'intérieur de l'enceinte.

Avantageusement alors, pour faciliter la circulation de la vapeur ou de l'air chauffé autour du pot, le panier est ajouré.

Selon une autre forme de réalisation, le panier comprend au moins une ouverture permettant de former ledit au moins un emplacement prévu pour recevoir ledit pot, l'enceinte étant délimitée dans sa partie supérieure par ledit panier.

Avantageusement alors, pour un meilleur transfert thermique, le pot est maintenu dans sa partie supérieure au niveau de ladite ouverture de sorte que la plus grande partie du pot se trouve dans l'enceinte sous le panier.

Selon une caractéristique avantageuse, le panier comprend plusieurs emplacements prévus pour recevoir des pots.

Avantageusement alors, pour une meilleure homogénéité de la préparation entre les différents pots, les emplacements sont agencés sur une zone annulaire du panier.

Avantageusement encore, les emplacements sont agencés en périphérie du réservoir et la base des pots se trouve plus haute que le niveau du liquide dans le réservoir. Selon l'invention, le pot disposé dans l'emplacement est agencé à distance du liquide disposé dans le réservoir. Ces dispositions permettent notamment d'éviter le contact direct du ou des pots avec le liquide contenu dans le réservoir ou avec la vapeur produite par le chauffage du réservoir.

Selon un premier mode d'exécution, le moyen chauffant permet d'évaporer l'eau contenue dans le réservoir en une durée inférieure ou égale à trente minutes, et de préférence inférieure ou égale à dix minutes.

Avantageusement alors, le moyen chauffant est associé à des moyens de régulation de température autorisant la chauffe à sec du moyen chauffant. Cette disposition permet ainsi de conserver dans l'enceinte une température appropriée pour la fabrication des yaourts, après la première phase de montée en température. En alternative, l'évolution de la température dans l'enceinte de l'appareil lors de la deuxième phase pourrait être contrôlée par l'isolation du boîtier ; l'utilisation d'un moyen chauffant additionnel pourrait également être envisagée.

Selon une forme de réalisation avantageuse favorisant la chauffe homogène de plusieurs pots, le réservoir et le moyen chauffant sont agencés dans la partie centrale d'un fond de l'enceinte.

Avantageusement alors, le réservoir est formé par une dépression centrale du fond et le moyen chauffant est logé dans ladite dépression centrale. Cette disposition permet de définir la quantité d'eau nécessaire pour le fonctionnement de l'appareil.

Avantageusement alors, la dépression centrale est entourée par une zone annulaire du fond séparée du réservoir par un seuil, ladite zone annulaire du fond présentant une inclinaison vers le bas en direction de la périphérie. Cette disposition permet de former un espace de récupération des condensats dans ladite zone annulaire.

Selon un second mode d'exécution, l'enceinte présente une partie inférieure comprenant une cuve formant le réservoir, le moyen chauffant étant apte à chauffer la cuve. Avantageusement, le moyen chauffant est solidaire de la cuve. En alternative, la cuve pourrait notamment reposer sur le moyen chauffant.

Avantageusement alors, le moyen chauffant est associé à des moyens de régulation de température présentant une première température de coupure et une deuxième température de coupure inférieure à la première température de coupure. Ainsi le bain de liquide peut être porté à une température supérieure à l'intervalle de température de fabrication de yaourt, lors de la première phase, et être maintenu à une température voisine ou comprise dans l'intervalle de température de fabrication de yaourt, lors de la deuxième phase. En alternative, un moyen chauffant additionnel pourrait notamment être utilisé lors de la deuxième phase.

Avantageusement encore, l'intervalle de température de fabrication de yaourt est compris entre 37 et 52°C, et de préférence entre 40 et 50°C.

Avantageusement encore le moyen chauffant présente une puissance supérieure ou égale à 150 W. Les yaourtières à paraffine présentant une puissance de 130 W sont les yaourtières les plus puissantes connues sur le marché. Les yaourtières dans lesquelles l'élément chauffant est agencé dans l'air ou contre le fond d'une cuve utilisent un élément chauffant d'une puissance, beaucoup moins élevée, au maximum de 15 W.

Ces objets, caractéristiques et avantages de la présente invention seront exposés en détail dans la description suivante de modes d'exécution particuliers faits à titre non-limitatif en relation avec les figures jointes parmi lesquelles :
- la figure 1 représente en perspective une yaourtière sans son couvercle principal, selon un premier mode d'exécution de l'invention,
- la figure 2 représente une vue en coupe selon un plan vertical de la yaourtière selon le premier mode d'exécution de l'invention,
- la figure 3 représente une vue en perspective d'un panier selon le premier mode d'exécution de l'invention,
- la figure 4 représente une vue en perspective éclatée de la yaourtière selon le premier mode d'exécution de l'invention,
- la figure 5 représente des courbes de température en fonction du temps obtenue lors du fonctionnement de la yaourtière selon le premier mode d'exécution de l'invention,
- la figure 6 représente en perspective une yaourtière avec son couvercle principal tronqué, selon un second mode d'exécution de l'invention,
- la figure 7 représente une vue en coupe selon un plan vertical de la yaourtière selon le second mode d'exécution de l'invention,
- la figure 8 représente une vue en perspective éclatée de la yaourtière selon le second mode d'exécution de l'invention,
- la figure 9 représente des courbes de température en fonction du temps obtenues lors du fonctionnement de la yaourtière selon le second mode d'exécution de l'invention.

La présente invention concerne la transformation d'une préparation à base de lait en yaourt. La préparation à base de lait peut notamment comprendre du lait et des ferments lactiques, ou encore du lait et du yaourt.

Selon l'invention, il a été constaté que la préparation à base de lait disposée dans un pot de yaourtière ménagère ne se transforme en yaourt qu'au cours de la seconde phase du procédé de fabrication, lorsque la température de la préparation à base de lait a atteint une valeur comprise entre 37°C et 52°C, et de préférence entre 40 et 50°C.

Ainsi, pour accélérer la fabrication des yaourts, la yaourtière ménagère électrique selon l'invention met en oeuvre un procédé dans lequel la phase initiale de montée en température de la préparation à base de lait jusqu'à un intervalle de température de fabrication est fortement raccourcie, inférieure à trente minutes. La température de la préparation à base de lait est ensuite maintenue dans l'intervalle de température de fabrication de yaourt, avantageusement compris entre 37 et 52°C, et de préférence entre 40 et 50°C, pendant une durée de préférence supérieure ou égale à deux heures trente, et de préférence inférieure ou égale à quatre heures.

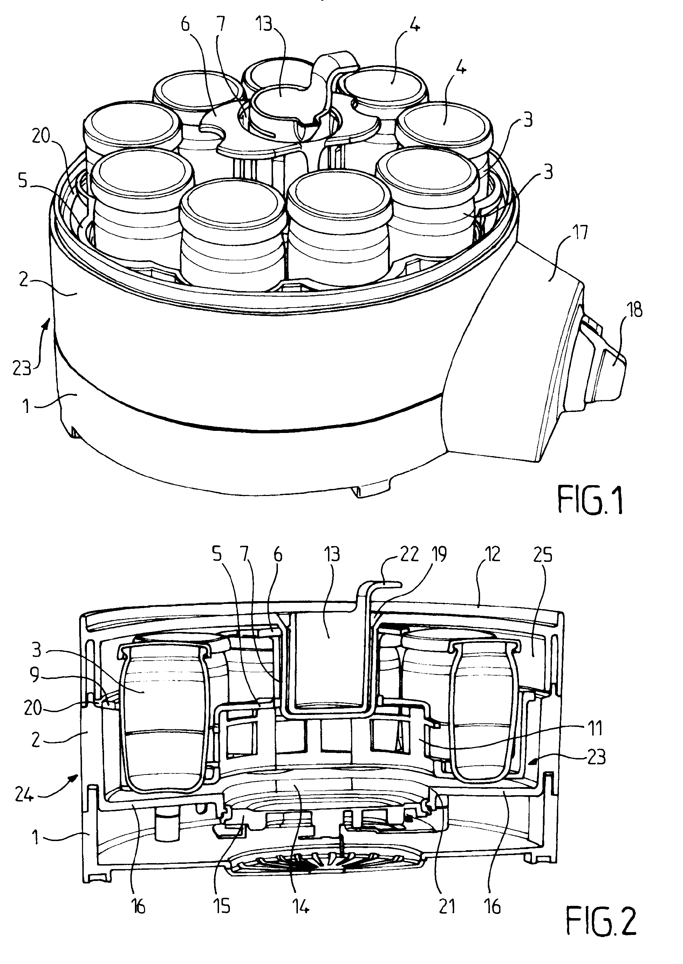

Les figures 1 à 4 représentent une yaourtière ménagère électrique selon un premier mode d'exécution de l'invention.

La figure 1 représente la yaourtière ménagère électrique selon le premier mode d'exécution de l'invention, dont le couvercle principal a été enlevé pour permettre la visualisation d'une partie de son volume intérieur.

Tel que représenté sur la figure 2, la yaourtière ménagère électrique selon le premier mode d'exécution de l'invention comprend un boîtier 24 formant une enceinte 25 associée à un moyen chauffant 15 et à un réservoir 14. Le moyen chauffant 15 est apte à évaporer l'eau contenue dans le réservoir 14 pour alimenter l'enceinte 25 en vapeur.

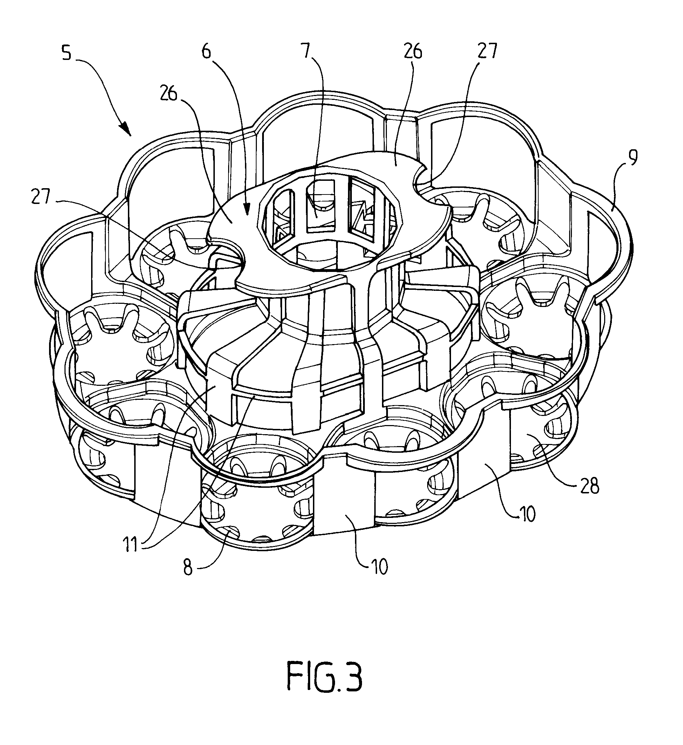

Le boîtier 24 comprend une base chauffante 23 formant un logement prévu pour recevoir des pots 3 destinés à recevoir une préparation à base de lait en vue de préparer des yaourts. Les pots 3 sont agencés dans un panier 5, mieux visible sur la figure 3. Chaque pot 3, de préférence en verre, est fermé par un couvercle 4 étanche qui peut se présenter sous la forme d'un capuchon plastique, en silicone par exemple, afin de supporter une température élevée.

La base chauffante 23 comprend une cuve 2 formant ledit logement recevant le panier 5. La base chauffante 23 comprend un socle 1 dans sa partie inférieure, surmonté par la cuve 2. Tel que visible sur les figures 1 et 2, la cuve 2 entoure au moins partiellement les pots 3. Le boîtier 24 comprend un couvercle principal 12. Le couvercle principal 12 est amovible et repose sur la base chauffante 23. La base chauffante 23 forme avec le couvercle principal 12 l'enceinte 25. L'enceinte 25 forme un volume prévu pour le positionnement du panier 5. Le volume prévu pour le positionnement du panier 5 est surmonté par le couvercle principal 12. L'enceinte 25 est avantageusement fermée, mais n'est pas nécessairement hermétiquement close.

La figure 2 représente l'intérieur de l'appareil électrique de chauffage d'aliments à la vapeur par une coupe par un plan vertical, qui permet de visualiser le moyen chauffant 15 disposé dans la partie inférieure et centrale, au niveau du socle 1, et de visualiser le panier 5 portant les pots 3 dans le volume supérieur de l'appareil, formé par la cuve 2 surmontée par le couvercle principal 12. Le couvercle principal 12 est disposé en appui sur la paroi cylindrique latérale de la cuve 2 de manière à fermer totalement l'enceinte 25 en garantissant son étanchéité. Le panier 5 est agencé à l'intérieur de l'enceinte 25. Le couvercle principal 12 comprend de préférence une double paroi isolante pour limiter les pertes thermiques hors de l'appareil. L'enceinte 25 présente un fond 16 formant une frontière avec le socle 1. Le fond 16 de l'enceinte 25 appartient à la cuve 2.

De plus, le couvercle principal 12 présente un logement 19 formant un renfoncement central, c'est-à-dire une partie creuse dans sa zone centrale, qui pénètre à l'intérieur d'un volume central formant un espace central de remplissage 7 aménagé au sein d'un organe de préhension 6 central du panier 5, qui sera plus précisément décrit ci-après. Dans ce logement 19 central du couvercle principal 12 est disposé un récipient doseur 13 d'eau. Tel que représenté sur la figure 1, le récipient doseur 13 d'eau est inséré dans l'espace central de remplissage 7 du panier 5. Tel que représenté sur la figure 2, le récipient doseur 13 d'eau comporte une poignée de préhension 22 dépassant de la surface du couvercle principal 12 quand le récipient doseur 13 d'eau est disposé dans le logement 19. Avantageusement encore, le récipient doseur 13 d'eau présente un bec verseur.

Selon des caractéristiques optionnelles, tout ou partie de la cuve 2 pourrait être réalisée en matériau transparent, par exemple en plastique transparent, afin de permettre à un utilisateur de voir les pots 3 contenus dans l'appareil. Avantageusement, le couvercle principal 12 sera opaque pour empêcher de visualiser les gouttes d'eau apparaissant par condensation sur sa face intérieure lors du fonctionnement de l'appareil.

La figure 3 représente plus précisément le panier 5 formant un support pour recevoir les différents pots 3. Le panier 5 est ajouré. Le panier 5 comprend plusieurs emplacements 28 prévus pour recevoir les pots 3. Le panier 5 est allongé selon une direction transversale. Plus particulièrement, le panier 5 forme un support comprenant l'organe de préhension 6 central entouré par les emplacements 28. Les emplacements 28 sont agencés sur une zone annulaire du panier 5.

Tel que représenté sur les figures 1 et 2, les emplacements 28 reçoivent les pots 3. L'organe de préhension 6 central ménage l'espace central de remplissage 7. Plus particulièrement, l'organe de préhension 6 central délimite l'espace central de remplissage 7 au sein duquel se positionne la partie creuse du couvercle principal 12 formant le logement 19 pour ranger le récipient doseur 13 d'eau. L'organe de préhension 6 central est apte à la saisie du panier 5 d'une seule main et permet un transport aisé du panier 5, utile notamment pour transporter les pots 3 dans un réfrigérateur après la fabrication des yaourts.

Dans le mode d'exécution décrit, l'organe de préhension 6 central comprend deux zones de préhension 26 disposées de part et d'autre de l'espace central de remplissage 7. De plus, au moins une des deux zones de préhension 26 présente un renfoncement 27 creusé vers l'espace central de remplissage 7, pour obtenir une forme ergonomique. Tel que représenté sur les figures, chacune des deux zones de préhension 26 présente un renfoncement 27 creusé vers l'espace central de remplissage 7.

Tel que visible sur la figure 1, le panier 5 illustré permet le positionnement de neuf pots 3, au sein des emplacements 28 mieux visibles sur la figure 3.

Le panier 5 comprend différents emplacements 28 pour recevoir des pots 3, qui sont agencés symétriquement sur une zone annulaire autour de l'organe de préhension 6 central. Les emplacements 28 du panier 5 sont disposés en périphérie du réservoir 14 lorsque le panier 5 est agencé dans le volume défini par l'enceinte 25. Ces emplacements 28 sont volontairement ajourés latéralement pour faciliter l'écoulement de la vapeur autour des pots dans la phase de fabrication du yaourt, ce qui permet d'atteindre un chauffage efficace et homogène de la préparation contenue dans les pots 3. Pour cela, chaque emplacement 28 comprend des moyens extérieurs de retenue latérale 9, consistant en une fine bande en portion de cercle entourant la paroi extérieure de chaque pot 3. Ces moyens extérieurs de retenue latérale 9 sont reliés entre eux par des parois verticales 10 disposées entre les différents emplacements 28. Ainsi les emplacements 28 sont ajourés latéralement. Enfin, une paroi intérieure 11 ajourée, particulièrement visible sur la figure 2, remplit la fonction complémentaire de moyen de retenue intérieure des pots 3. Ainsi le panier 5 est ajouré pour favoriser le passage de la vapeur entre l'espace central de remplissage 7 et les emplacements 28. De plus, ces emplacements 28 comprennent un moyen de support inférieur 8 sur lequel reposent les pots 3, qui consiste en plusieurs crochets permettant de maintenir la base d'un pot, tout en libérant au moins un disque central largement ouvert, afin de permettre aussi le contact de la vapeur avec la base de chaque pot.

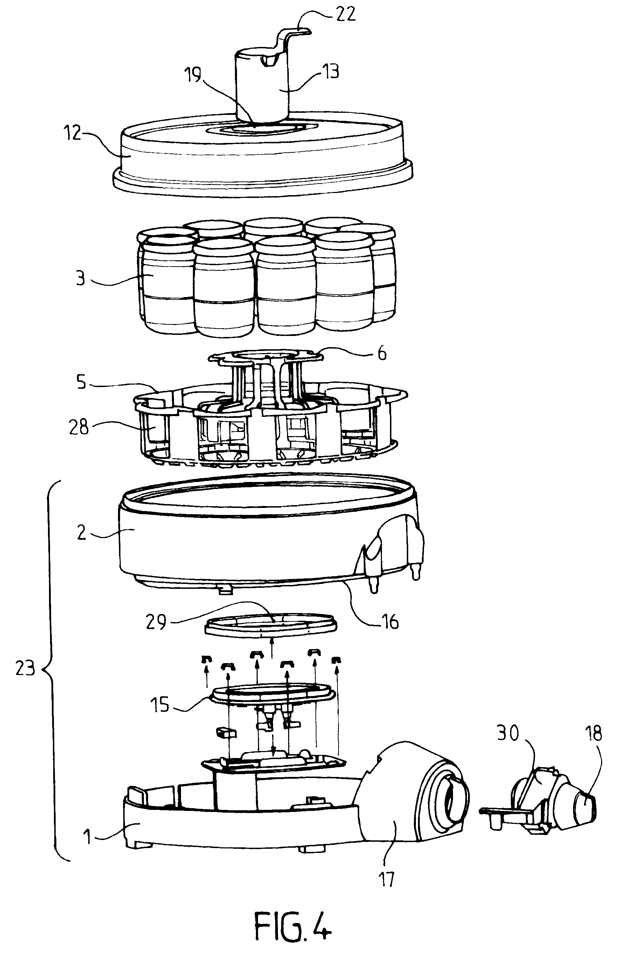

La figure 4 représente une vue éclatée en perspective de l'appareil, qui complète ainsi les illustrations précédentes. On y distingue le socle 1 auquel est relié un capot latéral 17 comprenant un dispositif de commande 30 du fonctionnement de l'appareil, notamment du moyen chauffant 15, incluant par exemple une minuterie pour gérer le temps de fonctionnement. Un bouton de sélection 18 associé au dispositif de commande 30 permet à un utilisateur la mise en route de l'appareil et éventuellement le choix parmi plusieurs modes de fonctionnement. Ainsi le capot latéral 17 et le bouton de sélection 18 appartiennent à la base chauffante 23.

Le moyen chauffant 15 présente de préférence une puissance supérieure ou égale à 150 W. Le moyen chauffant 15 présente de préférence une puissance inférieure ou égale à 3000 W. Dans l'exemple de réalisation illustré, le moyen chauffant 15 présente une puissance de 600 W.

Le moyen chauffant 15 consiste en une résistance chauffante annulaire formant un plateau chauffant positionné dans une ouverture du fond 16. Ainsi Le réservoir 14 et le moyen chauffant 15 sont agencés dans la partie centrale du fond 16 de l'enceinte 25. Le moyen chauffant 15 est associé à des moyens de régulation de température autorisant la chauffe à sec du moyen chauffant 15. Les moyens de régulation de température sont par exemple formés par un thermostat. Un joint annulaire 29 est interposé entre le moyen chauffant 15 et l'ouverture du fond de la cuve 2. Le réservoir 14 est formé par une dépression centrale du fond 16. Le moyen chauffant 15 est logé dans ladite dépression centrale. Plus particulièrement, le réservoir 14 est formé par une légère dépression de faible volume du fond 16 au dessus du moyen chauffant 15, pour recevoir l'eau nécessaire au fonctionnement de l'appareil. Cette dépression qui comprend à la fois le moyen chauffant 15 et le volume remplissant la fonction de réservoir 14 se présente donc sous la forme d'une portion creuse agencée au fond de la cuve 2, se logeant ainsi au sein du volume délimité par le socle 1. Par ce biais, l'enceinte 25 logeant le panier 5 s'étend au-dessus du moyen chauffant 15 et du réservoir 14. La dépression centrale est entourée par une zone annulaire du fond 16 séparée du réservoir 14 par un seuil 21, ladite zone annulaire du fond 16 présentant une inclinaison vers le bas en direction de la périphérie.

La yaourtière ménagère électrique selon le premier mode d'exécution comporte ainsi au moins un emplacement 28 pour un pot 3 contenant une préparation à base de lait, ledit pot 3 étant agencé au moins partiellement dans l'enceinte 25 délimitée par la base chauffante 23 et le couvercle principal 12. Ladite yaourtière comprend aussi le réservoir 14 pour recevoir un liquide. Ledit pot 3 disposé dans l'emplacement 28 est agencé à distance du liquide disposé dans le réservoir 14. Le réservoir 14 communique avec l'enceinte 25, et le moyen chauffant 15 apte à transmettre une puissance de chauffe au liquide permettant par transfert thermique de monter la température de ladite préparation à base de lait dans un intervalle de température de fabrication de yaourt en une durée inférieure ou égale à trente minutes. Ladite yaourtière comporte le panier 5 comprenant ledit au moins un emplacement 28.

Le fonctionnement de la yaourtière selon le premier mode d'exécution va maintenant être explicité.

Le réservoir 14 de la yaourtière est rempli de la bonne quantité d'eau grâce au récipient doseur 13, par un versement par le haut au niveau de la partie centrale de la yaourtière, par l'espace central de remplissage 7. Ensuite, le couvercle principal 12 est fermé et la yaourtière est mise en route. Le moyen chauffant 15 provoque la rapide évaporation de l'eau présente dans le réservoir 14 à proximité du moyen chauffant 15. Le moyen chauffant 15 permet d'évaporer l'eau contenue dans le réservoir 14 en une durée inférieure ou égale à trente minutes, et de préférence inférieure ou égale à dix minutes. La vapeur générée se répand dans le volume supérieur de la yaourtière, et notamment autour des pots 3 disposés dans le panier 5. La chaleur transmise à la préparation comprise dans les pots 3 permet la fabrication des yaourts.

Le bon dosage de la quantité d'eau utilisée dans le cycle de fonctionnement de la yaourtière est important puisque la température finale obtenue à l'intérieur de la yaourtière dépend de la quantité d'eau évaporée. Ainsi, le récipient doseur 13 d'eau permet à un utilisateur d'obtenir facilement et sans erreur cette bonne quantité d'eau.

Le volume du récipient doseur 13 d'eau correspond avantageusement à la quantité d'eau nécessaire pour un cycle de fonctionnement de l'appareil électrique de chauffage d'aliments. En variante, le volume du récipient doseur 13 d'eau est légèrement supérieur à cette quantité d'eau nécessaire et une graduation est ajoutée sur ce récipient doseur 13 d'eau pour indiquer la bonne quantité d'eau. Bien entendu, le récipient doseur 13 d'eau pourrait comprendre plusieurs graduations en fonction du nombre de cycles de fonctionnement différents.

Bien entendu, l'invention ne se limite pas au mode d'exécution décrit ci-dessus. La yaourtière illustrée pourrait se présenter sous une autre forme, comprendre tout autre volume pouvant intégrer tout autre nombre que neuf pots, ces pots pouvant être n'importe quel réceptacle pour aliments à chauffer ou cuire, réceptacle qui peut se trouver dans d'autres matériaux, comme du plastique. Par exemple, la yaourtière peut être obtenue par une association différente d'un socle et d'une cuve surmontée d'un couvercle principal. Le volume de chauffage ou cuisson peut être formé par tout autre élément que la cuve décrite, plus généralement par tout boîtier formant une enceinte, associée à un moyen chauffant et adaptée pour recevoir les pots ou réceptacles à chauffer. De plus, ce boîtier ne comprend pas nécessairement un couvercle principal mais la yaourtière peut être formée par toute autre superposition de différents éléments.

En complément, le réservoir 14 de la yaourtière, formé par une dépression dans la zone centrale du fond 16 comme cela a été décrit auparavant, est délimité par le seuil 21 de la partie annulaire du fond 16 qui entoure la dépression. Cette géométrie remplit une fonction de trop plein d'eau, qui permet une évacuation latérale automatique de toute quantité d'eau qui serait versée en trop, par un débordement naturel d'un tel éventuel trop plein d'eau et sa circulation vers la partie annulaire du fond 16. La partie annulaire du fond 16 présente de plus une inclinaison vers le bas vers la périphérie de l'enceinte 25 de manière à favoriser l'écoulement de l'eau qui s'y trouverait vers la paroi cylindrique extérieure de la yaourtière, que ce soit l'eau versée en trop et débordant du réservoir 14 ou l'eau condensée au cours du fonctionnement de la yaourtière, pour éviter son retour dans le réservoir 14 ou à proximité du moyen de chauffe 15, qui entraînerait une nouvelle évaporation qui pourrait fausser la maîtrise du chauffage mis en oeuvre au sein de la yaourtière en élevant la température de manière intempestive. En remarque, le couvercle principal 12 présente une forme avantageusement similaire à celle de la partie périphérique du fond 16, inclinée vers le bas vers sa périphérie, ce qui remplit aussi une fonction de circulation des eaux de condensation vers la paroi latérale de la yaourtière.

Selon une caractéristique avantageuse de l'invention, les pots 3 contenant la préparation de yaourt sont répartis de manière symétrique et homogène autour du moyen chauffant 15, grâce à leur emplacement précis à l'aide du panier 5. Cela permet d'obtenir le même résultat dans chaque pot 3. Ensuite, le fait qu'aucune partie de pot 3 ne soit directement superposée au moyen chauffant 15 permet d'éviter un résultat non homogène au sein d'un même pot 3. En effet, comme cela apparaît clairement sur les figures et plus particulièrement sur la figure 2, les pots 3 sont disposés selon un positionnement annulaire autour du moyen chauffant 15 positionné au centre de la yaourtière, sans venir, même partiellement, au-dessus dudit moyen chauffant 15. Cette géométrie favorise l'obtention de sensiblement la même température intérieure au sein de chaque pot 3 et l'obtention d'un yaourt homogène dans chaque pot 3.

Enfin, la structure ajourée du panier 5 permet la circulation de la vapeur sur toute la périphérie de chaque pot et garantit un transfert thermique à la fois homogène et optimal avec les pots. En remarque, le panier 5 est positionné dans l'enceinte 25 de sorte que le moyen de support inférieur 8 des pots se trouve au-dessus et à distance du fond 16, laissant un espace libre qui permet à la vapeur de circuler aussi sous les pots 3. Pour cela, le panier 5 comprend des organes d'appui pour reposer sur un rebord 20 d'une paroi latérale de la cuve 2. Sur le mode d'exécution représenté, ces organes d'appui correspondent aux moyens extérieurs de retenue latérale 9, qui remplissent donc une double fonction. Le panier 5 est ainsi suspendu au dessus du fond 16, au dessus du réservoir 14 et au dessus du moyen chauffant 15. De plus, le fait que le réservoir 14 se trouve sous le niveau inférieur du fond 16 comprenant les pots 3 est un second facteur favorisant la circulation de la vapeur sous les pots 3. La base des pots 3 se trouve plus haute que le niveau du liquide dans le réservoir 14. Enfin, la circulation de la vapeur est aussi favorisée sur les parois latérales des pots 3, par la structure ajourée du panier 5 au niveau des parois latérales des pots 3, comme cela a été explicité auparavant. Notamment, la structure ajourée de la paroi intérieure 11 du panier favorise le passage de la vapeur depuis l'espace central de remplissage 7 jusqu'aux parois latérales des pots 3. Les pots 3 sont maintenus à distance des parois du réservoir 14.

La yaourtière décrite ci-dessus permet la mise en oeuvre d'un procédé avantageux de fabrication de yaourt qui va maintenant être expliqué.

Dans une phase initiale de chauffe, le moyen chauffant 15 porte à ébullition l'eau contenue dans le réservoir 14. Le chauffage se poursuit jusqu'à l'évaporation totale de la quantité d'eau contenue dans le réservoir 14. La vapeur formée durant cette phase initiale se répand dans tout le volume supérieur où sont stockés les pots 3 contenant la préparation, comme cela a été expliqué auparavant. La vapeur permet ainsi le transport rapide et efficace de l'énergie transmise par le moyen chauffant 15 jusqu'aux pots 3. Cette chaleur est transmise à l'intérieur des pots 3 par conduction jusqu'à la préparation que les pots 3 contiennent. La quantité d'eau évaporée est calculée pour que la température intérieure des pots 3 atteigne la valeur recherchée, entre 40 et 50 degrés C, optimale pour la fabrication des yaourts. En utilisant une puissance de chauffe de 600 W, cette température peut être atteinte en environ cinq minutes. En variante, tout autre moyen chauffant peut convenir, dès lors qu'il permet d'obtenir la hausse de température recherchée en une durée inférieure ou égale à trente minutes.

Dans une seconde phase du procédé de fabrication des yaourts, qui débute lorsque la température recherchée est atteinte à la fin de la première phase, par l'évaporation totale de l'eau stockée, les moyens de régulation de température associés au moyen chauffant 15 permettent de réguler et stabiliser la température intérieure de la yaourtière à l'intérieur de l'intervalle de température de fabrication de yaourt. Cette seconde phase est poursuivie pendant une durée d'environ trois heures pour obtenir finalement des yaourts. La seconde phase de régulation est de préférence supérieure à deux heures trente et présente avantageusement une durée inférieure ou égale à quatre heures.

En remarque, l'eau condensée lors de cette seconde phase est évacuée latéralement, comme cela a été explicité précédemment, ce qui permet de faciliter le maintien de la température.

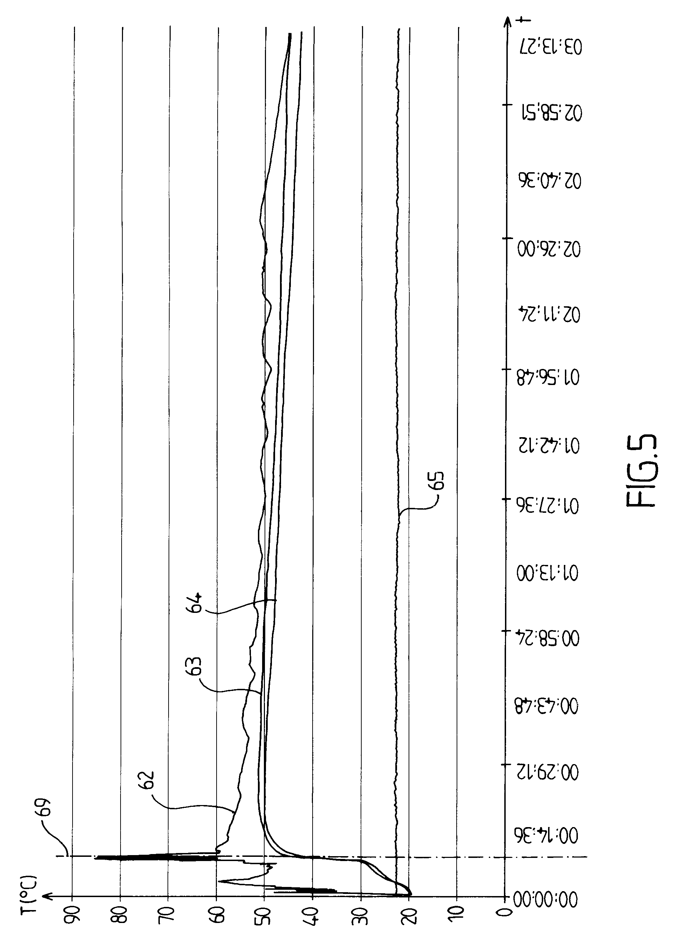

La figure 5 représente des courbes de température obtenues lors de la mise en oeuvre d'un procédé de fabrication de yaourt avec une yaourtière ménagère électrique telle que décrite ci-dessus. La courbe 62 représente la température au sein de l'enceinte 25 de la yaourtière. On distingue nettement une première phase de forte montée de cette température, depuis une température initiale proche de la température ambiante représentée par la courbe 65, jusqu'à une température stabilisée légèrement au-delà de 50°C. Les courbes 63 et 64 représentent les températures mesurées à l'intérieur de deux pots 3 distincts. On remarque d'abord que ces deux courbes sont très proches. De plus, on distingue une première phase de montée en température, jusqu'à une température stabilisée proche de 50°C, qui décroit ensuite légèrement dans le temps. La délimitation 69 représente la séparation entre la première phase de chauffe pour obtenir la montée rapide en température, puis la seconde phase de maintien de la température. Dans l'exemple illustré sur la figure 5, cette première phase de chauffe dure environ dix minutes. Après dix minutes, une courte période transitoire permet à la température à l'intérieur de l'enceinte de redescendre et à la température de la préparation dans les pots d'atteindre sa valeur de régulation. Ensuite, la seconde phase consiste au maintien d'une température stabilisée de la yaourtière pendant une durée d'environ trois heures.

Naturellement, les courbes précédentes illustrent un exemple de manière non limitative. La première phase peut présenter d'autres caractéristiques, mais toutefois une durée inférieure ou égale à trente minutes et avantageusement une durée inférieure à dix minutes. En effet, cette première phase a peu ou pas d'influence sur la fabrication proprement dite des yaourts et il est intéressant de la raccourcir au maximum, dans les limites d'un compromis acceptable de la puissance maximale disponible et mise en oeuvre au sein de la yaourtière.

Le milieu humide prévu dans la yaourtière permet un transfert thermique rapide et efficace pour chauffer la préparation qui se transforme en yaourt, tout en permettant aux pots 3 de rester finalement secs en fin de cycle de fonctionnement de la yaourtière, ce qui est agréable au toucher pour l'utilisateur qui récupère les pots 3 lorsque les yaourts sont prêts.

La transformation de l'eau présente initialement dans le réservoir 14 en vapeur circulant dans l'enceinte 25 autour des pots 3 soumet l'intérieur de la yaourtière à une température susceptible de remplir une fonction supplémentaire de nettoyage, voire de stérilisation de la yaourtière.

Selon une variante de réalisation de la seconde phase du procédé de fabrication de yaourt, le maintien de la température pourrait être obtenu par une succession d'évaporation et condensation de faibles quantités d'eau, pour obtenir une oscillation de la température de la préparation contenue à l'intérieur des pots 3 autour d'une température moyenne qui soit comprise entre 37°C et 52°C, de préférence supérieure à 40°C et/ou inférieure à 50°C.

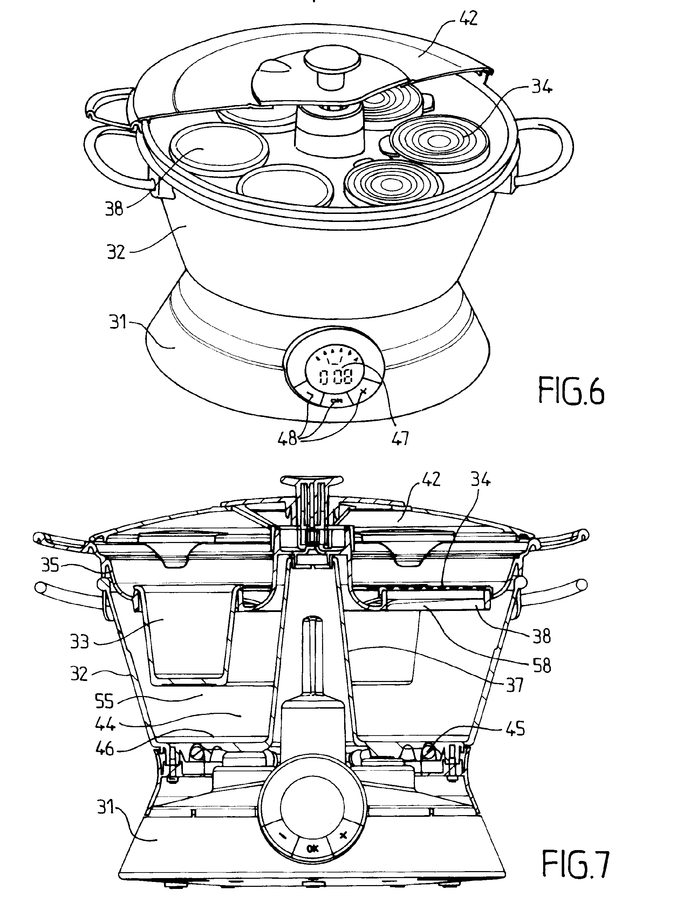

Les figures 6 à 8 représentent un second mode d'exécution d'une yaourtière ménagère électrique selon la présente invention.

Cette yaourtière ménagère électrique comprend un socle 31 surmonté par une cuve 32. Elle comprend différentes touches 48 ainsi qu'un écran 47 au niveau du socle 31, afin de permettre à un utilisateur de choisir un mode de fonctionnement parmi plusieurs modes de chauffage possibles dont au moins un prévu pour la fabrication de yaourts. La cuve 32 forme un réservoir 44 prévu pour recevoir un liquide, avantageusement de l'eau. La cuve 32 intègre un moyen chauffant 45 dans sa partie inférieure. Plus particulièrement, la cuve 32 est métallique et le moyen chauffant 45 est agencé sous un fond 46 de la cuve 32. Ainsi le moyen chauffant 45 est situé sous le réservoir 44. La cuve 32 présente une cheminée 37 de forme tronconique qui s'étend depuis le fond 46 de la cuve 32 sur toute la hauteur de la cuve 32.

Un panier 35 est agencé sur la cuve 32. Le panier 35 repose sur le bord annulaire supérieur de la cuve 32 ainsi que sur la cheminée 37. Le panier 35 est ainsi suspendu au dessus du fond 46 de la cuve 32, au dessus du réservoir 44 et au dessus du moyen chauffant 45. Un couvercle principal 42 recouvre le panier 35.

Le panier 35 comprend six ouvertures 38 en forme de disque symétriquement réparties sur sa périphérie. Le panier 35 comprend une partie centrale 36 de liaison qui vient reposer autour de la partie supérieure de la cheminée 37, ainsi que des rebords latéraux 39 qui viennent en appui au niveau de l'extrémité supérieure de la cuve 32. Cette géométrie permet le positionnement du panier 35 dans la partie haute de la cuve 32.

Chaque ouverture 38 du panier 35 forme un emplacement 58 pour un pot 33 comprenant une préparation pour la fabrication d'un yaourt. Le panier 35 comprend ainsi plusieurs emplacements 58 prévus pour recevoir des pots 33. Les pots 33 sont maintenus à distance des parois du réservoir 44. Les emplacements 58 sont agencés sur une zone annulaire du panier 35. Chaque pot 33 présente une forme telle que sa partie haute vienne en appui sur la circonférence d'une ouverture 38, de sorte que la grande majorité du pot 33 s'étende sous le panier 35. Avantageusement, au moins les trois quarts de la hauteur du pot 33 s'étendent sous la surface inférieure du panier 35.

Une enceinte 55 de la yaourtière formant une zone chauffante est délimitée sur ses côtés par la paroi latérale de la cuve 32 d'une part et par la cheminée 37 d'autre part, et dans sa partie inférieure par le fond 46 de la cuve 32 et dans sa partie supérieure par le panier 35 L'enceinte 55 est ainsi délimitée par la cuve 32 et le panier 35. Ainsi l'enceinte 55 présente une partie inférieure comprenant la cuve 32 formant le réservoir 44, le moyen chauffant étant apte à chauffer la cuve 32. Les ouvertures 38 du panier 35 sont fermées de manière étanche ou quasi-étanche par les pots 33 qui s'y trouvent. L'enceinte 55 est ainsi fermée de manière étanche ou quasi-étanche, mais n'est pas nécessairement hermétiquement close.

En remarque, chaque pot 33 est associé à un couvercle 34. Le couvercle 34 n'est pas utilisé lors de la préparation de yaourts. Toutefois si certaines ouvertures 38 du panier 35 ne comprennent pas de pot 33, alors il convient de les fermer par un couvercle 34, tel que représenté sur les figures 6 et 7. L'enceinte 55 reste ainsi fermée de manière étanche ou quasi-étanche.

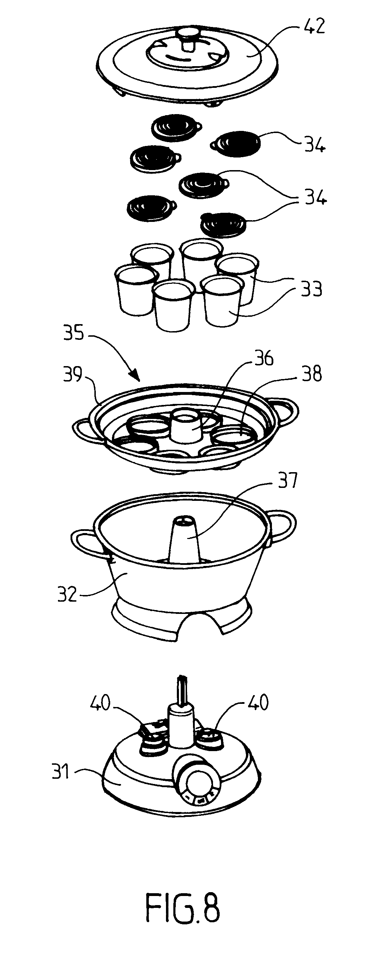

La figure 8 montre en vue éclatée les différents composants de la yaourtière. Le socle 31 comprend des moyens de liaison électrique 40 avec des moyens correspondants non représentés de la partie basse de la cuve 32, afin d'alimenter électriquement le moyen chauffant 45 (non représenté sur la figure 8).

La yaourtière ménagère électrique selon le second mode d'exécution comporte ainsi au moins un emplacement 58 pour un pot 33 contenant une préparation à base de lait, ledit pot 33 étant agencé au moins partiellement dans l'enceinte 55. Ladite yaourtière comprend aussi le réservoir 44 pour recevoir un liquide, le réservoir 44 communiquant avec l'enceinte 55, et le moyen chauffant 45 apte à transmettre une puissance de chauffe au liquide permettant par transfert thermique de monter la température de ladite préparation à base de lait dans un intervalle de température de fabrication de yaourt en une durée inférieure ou égale à trente minutes.

Plus particulièrement, ladite yaourtière comporte le panier 35 comprenant ledit au moins un emplacement 58. Le panier 35 comprend au moins une ouverture 38 permettant de former ledit au moins un emplacement 58 prévu pour recevoir ledit pot 33. L'enceinte 55 est délimitée dans sa partie supérieure par ledit panier 35. Le pot 33 est maintenu dans sa partie supérieure au niveau de ladite ouverture 38 de sorte que la plus grande partie du pot 33 se trouve dans l'enceinte 55 sous le panier 35. Selon l'invention, le pot 33 disposé dans l'emplacement 58 est agencé à distance du liquide disposé dans le réservoir 44.

Le moyen chauffant 45 est avantageusement associé à des moyens de régulation de température présentant une première température de coupure et une deuxième température de coupure inférieure à la première température de coupure. Les moyens de régulation de température peuvent notamment comporter une résistance CTN associée à un micro-contrôleur.

Le fonctionnement de la yaourtière selon le second mode d'exécution va maintenant être explicité, notamment sa mise en oeuvre du procédé de fabrication de yaourt selon l'invention.

Avant la mise en route de la yaourtière, l'utilisateur dispose une quantité prédéfinie de liquide dans la cuve 32, avantageusement de l'eau. Cette partie inférieure de la cuve 32 forme donc un réservoir 44 pour le liquide nécessaire au cycle de chauffe. Ensuite, le procédé de fabrication de yaourt met en oeuvre une première phase de chauffe intensive, qui permet d'élever très rapidement la température du liquide présent dans le réservoir 44. Cette chaleur générée est transmise par convection aux différents pots 33 présents dans l'enceinte 55. Avantageusement, du fait de la présence d'eau chaude dans la partie inférieure de l'enceinte 55, l'air au dessus du niveau d'eau est humide et la conduction thermique de la chaleur jusqu'aux pots 33 se réalise de manière efficace et rapide ; la préparation présente au sein des pots 33 atteint ainsi rapidement la température requise pour la fabrication des yaourts. L'alimentation du moyen chauffant 45 est coupée en utilisant la première température de coupure des moyens de régulation de température. Ensuite, la seconde phase de régulation de la température est engagée, en utilisant la deuxième température de coupure des moyens de régulation de température. Cette régulation est obtenue par des successions de périodes de chauffe et de non chauffe, de manière à obtenir une température moyenne sensiblement constante de la préparation contenue à l'intérieur des pots 33, qui reste comprise dans l'intervalle de température de fabrication de yaourt. La seconde phase de régulation est de préférence supérieure à trois heures et présente avantageusement une durée inférieure ou égale à quatre heures.

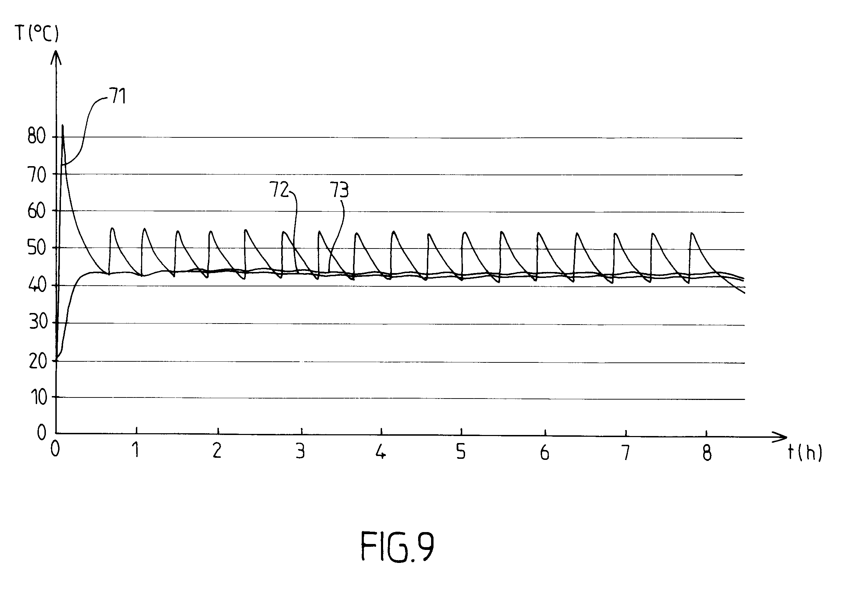

La figure 9 représente des courbes de température obtenues lors de la mise en oeuvre du procédé de fabrication de yaourt tel qu'explicité ci-dessus, à l'aide de la yaourtière selon le second mode d'exécution de l'invention.

La courbe 71 représente la température dans le bain de liquide, formé par un bain d'eau. Les courbes 72 et 73 représentent les températures mesurées à l'intérieur de deux pots 33 distincts. On remarque que ces deux courbes sont très proches. Sur la courbe 71, on distingue nettement une forte montée initiale de la température du bain de liquide, depuis une température initiale proche de la température ambiante, jusqu'à une température dépassant 80°C, mais restant inférieure à 100°C. La coupure de l'alimentation du moyen chauffant 45 est effectuée en utilisant la première température de coupure des moyens de régulation de température. La température du bain de liquide est alors sensiblement égale à la température à l'intérieur des pots 33. La première phase permettant de porter la température de la préparation à base de lait contenue dans les pots 33 dans l'intervalle de température de fabrication de yaourt est également effectuée en moins de trente minutes.

Après la réalimentation du moyen chauffant 45, une régulation de température est obtenue en utilisant la deuxième température de coupure des moyens de régulation de température, plus basse que la première température de coupure. La seconde phase consiste en une succession de courtes périodes de chauffe de l'ordre d'une minute environ, permettant à la température du bain de liquide de remonter jusqu'à une température d'environ 55°C, La température dans les pots oscille ainsi entre 42 et 45°C, et peut être maintenue pendant plusieurs heures, tel que représenté sur la figure 9. La seconde phase de régulation est de préférence supérieure à trois heures, et présente avantageusement une durée inférieure ou égale à quatre heures.

Dans ce mode d'exécution illustré, le moyen chauffant 45 consiste en une résistance électrique de 900 W. Le moyen chauffant 45 peut présenter une autre valeur de puissance, de préférence supérieure à 400 W et avantageusement inférieure à 3000 W. De plus, la yaourtière pourrait présenter une autre géométrie équivalente, d'autres dimensions pour recevoir plus ou moins de réceptacles pour former des yaourts.

Dans le mode d'exécution décrit ci-dessus, les pots 33 restent en dehors du bain d'eau présent dans la cuve 32, c'est-à-dire que le réservoir 44 n'est rempli d'eau que jusqu'à une hauteur inférieure à la hauteur de la base des pots 33 qui sont positionnés dans les ouvertures 38 du panier 35.

En variante, tout autre fluide que l'eau pourrait être utilisé pour le transfert thermique du moyen chauffant 45 vers la préparation contenue dans les pots 33.

L'invention concerne également un procédé de fabrication de yaourt à partir d'un pot 3 ; 33 contenant une préparation à base de lait, comprenant une étape de chauffage du pot 3 ; 33 agencé au moins partiellement dans l'enceinte 25 ; 55. Selon ledit procédé, l'étape de chauffage du pot 3 ; 33 comprend une première phase de durée inférieure ou égale à trente minutes consistant à chauffer un liquide disposé dans l'enceinte 25 ; 55 à proximité du pot 3 ; 33 de sorte à porter la température de ladite préparation à base de lait dans l'intervalle de température de fabrication de yaourt.

Dans les deux modes d'exécution de l'invention illustrés, ledit procédé consiste à agencer le pot 3 ; 33 à distance du liquide, ladite première phase consistant à élever la température d'un fluide gazeux au contact du pot 3 ; 33 en chauffant ledit liquide. Plus particulièrement, lors de la première phase, la température du liquide est élevée au dessus de l'intervalle de température de fabrication de yaourt, de manière à créer une masse thermique diffusant ses calories vers le pot 3 ; 33 par l'intermédiaire du fluide gazeux.

Dans le premier mode d'exécution de l'invention illustré, la première phase consiste en l'évaporation dans l'enceinte 25 d'une quantité d'eau prédéfinie et en une circulation de la vapeur obtenue autour du pot 3. Le fluide gazeux comprend donc de la vapeur d'eau.

Dans le second mode d'exécution de l'invention illustré, la première phase consiste en un chauffage intensif d'un bain de liquide disposé dans l'enceinte 55, jusqu'à une température supérieure à 50°C mais inférieure à la température d'évaporation dudit liquide. Le liquide est avantageusement de l'eau, mais tout autre liquide alimentaire peut être utilisé. Le fluide gazeux est formé par l'air ambiant.

Dans les deux modes d'exécution de l'invention illustrés, ledit procédé comprend avantageusement une seconde phase de durée inférieure ou égale à quatre heures de régulation de la température de la préparation à base de lait dans l'intervalle de température de fabrication de yaourt.

La solution de fabrication de yaourt ainsi décrite est adaptée pour une fabrication rapide d'un ou plusieurs yaourts, et permet une mise en oeuvre aisée en journée.

En variante, le panier 5 et le couvercle principal 12 de la yaourtière ménagère électrique selon le premier mode d'exécution de l'invention pourraient être utilisés dans une yaourtière ménagère électrique selon le second mode d'exécution de l'invention ; le panier 35 et le couvercle principal 42 de la yaourtière ménagère électrique selon le second mode d'exécution de l'invention pourraient être utilisés dans une yaourtière ménagère électrique selon le premier mode d'exécution de l'invention.

En variante, le moyen chauffant 15 ; 45 pourrait comporter plusieurs éléments chauffants alimentés simultanément et/ou séparément.

La présente invention n'est nullement limitée aux exemples de réalisation décrits, mais englobe de nombreuses modifications dans le cadre des revendications.

## Revendications

1. Procédé de fabrication de yaourt à partir d'un pot (3 ; 33) contenant une préparation à base de lait, comprenant une étape de chauffage du pot (3 ; 33) agencé au moins partiellement dans une enceinte (25 ; 55), **caractérisé en ce que** l'étape de chauffage du pot (3 ; 33) comprend une première phase de durée inférieure ou égale à trente minutes consistant à chauffer un liquide disposé dans l'enceinte (25 ; 55) à proximité du pot (3 ; 33) de sorte à porter la température de ladite préparation à base de lait dans un intervalle de température de fabrication de yaourt, **en ce que** le procédé consiste à agencer le pot (3 ; 33) à distance du liquide et **en ce que** ladite première phase consiste à élever la température d'un fluide gazeux au contact du pot (3 ; 33) en chauffant ledit liquide.

2. Procédé de fabrication de yaourt selon la revendication 1, **caractérisé en ce que** la première phase consiste en l'évaporation dans l'enceinte (25) d'une quantité d'eau prédéfinie et en une circulation de la vapeur obtenue autour du pot (3).

3. Procédé de fabrication de yaourt selon la revendication 1, **caractérisé en ce que** la première phase consiste en un chauffage intensif d'un bain de liquide disposé dans l'enceinte (55) jusqu'à une température supérieure à 50°C mais inférieure à la température d'évaporation dudit liquide.

4. Procédé de fabrication de yaourt selon l'une des revendications 1 à 3, **caractérisé en ce qu'**il comprend une seconde phase de durée inférieure ou égale à quatre heures de régulation de la température de la préparation à base de lait dans l'intervalle de température de fabrication de yaourt.

5. Procédé de fabrication de yaourt selon les revendications 1 à 4, **caractérisé en ce que** l'intervalle de température de fabrication de yaourt est compris entre 37 et 52°C et de préférence entre 40 et 50°C.

6. Yaourtière ménagère électrique comportant au moins un emplacement (28 ; 58) pour un pot (3 ; 33) contenant une préparation à base de lait, un réservoir (14 ; 44) pour recevoir un liquide, et un moyen chauffant (15 ; 45) prévu pour chauffer le liquide contenu dans le réservoir (14 ; 44), ledit pot (3 ; 33) étant agencé au moins partiellement dans une enceinte (25 ; 55), le réservoir (14; 44) communiquant avec l'enceinte (25; 55), **caractérisée en ce que** le pot (3 ; 33) disposé dans l'emplacement (28 ; 58) est agencé à distance du liquide disposé dans le réservoir (14 ; 44), et **en ce que** le moyen chauffant (15; 45) est apte à transmettre une puissance de chauffe au liquide permettant par transfert thermique de monter la température de ladite préparation à base de lait dans un intervalle de température de fabrication de yaourt en une durée inférieure ou égale à trente minutes.

7. Yaourtière ménagère électrique selon la revendication 6, **caractérisée en ce qu'**elle comporte un panier (5 ; 35) comprenant ledit au moins un emplacement (28 ; 58).

8. Yaourtière ménagère électrique selon la revendication 7, **caractérisée en ce que** le panier (5) est agencé à l'intérieur de l'enceinte (25).

9. Yaourtière ménagère électrique selon la revendication 7, **caractérisée en ce que** le panier (35) comprend au moins une ouverture (38) permettant de former ledit au moins un emplacement (58) prévu pour recevoir ledit pot (33) et **en ce que** l'enceinte (55) est délimitée dans sa partie supérieure par ledit panier (35).

10. Yaourtière ménagère électrique selon la revendication 9, **caractérisée en ce que** le pot (33) est maintenu dans sa partie supérieure au niveau de ladite ouverture (38) de sorte que la plus grande partie du pot (33) se trouve dans l'enceinte (55) sous le panier (35).

11. Yaourtière ménagère électrique selon l'une des revendications 6 à 10, **caractérisée en ce que** le moyen chauffant (15) permet d'évaporer l'eau contenue dans le réservoir (14) en une durée inférieure ou égale à trente minutes, et de préférence inférieure ou égale à dix minutes.

12. Yaourtière ménagère électrique selon la revendication 11, **caractérisée en ce que** le réservoir (14) et le moyen chauffant (15) sont agencés dans la partie centrale d'un fond (16) de l'enceinte (25), **en ce que** le réservoir (14) est formé par une dépression centrale du fond (16), **en ce que** le moyen chauffant (15) est logé dans ladite dépression centrale, **en ce que** la dépression centrale est entourée par une zone annulaire du fond (16) séparée du réservoir (14) par un seuil (21), et **en ce que** ladite zone annulaire du fond (16) présente une inclinaison vers le bas en direction de la périphérie.

13. Yaourtière ménagère électrique selon l'une des revendications 6 à 10, **caractérisée en ce que** l'enceinte (55) présente une partie inférieure comprenant une cuve (32) formant le réservoir (44) et **en ce que** le moyen chauffant (45) est apte à chauffer la cuve (32).

14. Yaourtière ménagère électrique selon l'une des revendications 6 à 13, **caractérisée en ce que** l'intervalle de température de fabrication de yaourt est compris entre 37 et 52°C, et de préférence entre 40 et 50°C.

15. Yaourtière ménagère électrique selon l'une des revendications 6 à 14, **caractérisée en ce que** le moyen chauffant (15; 45) présente une puissance supérieure ou égale à 150 W.

## Patentansprüche

1. Verfahren zur Herstellung von Joghurt ausgehend von einem Becher (3; 33), der eine Zubereitung auf Milchbasis enthält, wobei das Verfahren einen Schritt des Erhitzens des Bechers (3; 33) umfasst, der zumindest teilweise in einem abgeschlossenen Raum (25; 55) angeordnet ist, **dadurch gekennzeichnet, dass** der Schritt des Erhitzens des Bechers (3; 33) eine erste Phase mit einer Dauer von maximal dreißig Minuten umfasst, in der eine in dem abgeschlossenen Raum (25; 55) befindliche Flüssigkeit nahe dem Becher (3; 33) derart erhitzt wird, dass die Temperatur der genannten Zubereitung auf Milchbasis in einen Temperaturbereich für die Herstellung von Joghurt erhöht wird, dass das Verfahren darin besteht, den Becher (3; 33) von der Flüssigkeit entfernt anzuordnen und dass die genannte erste Phase in der Erhöhung der Temperatur eines mit dem Becher (3; 33) in Kontakt befindlichen gasförmigen Fluids besteht, indem die genannte Flüssigkeit erhitzt wird.

2. Verfahren zur Herstellung von Joghurt nach Anspruch 1, **dadurch gekennzeichnet, dass** die erste Phase in der Verdampfung einer vorbestimmten Menge Wasser in dem abgeschlossenen Raum (25) und einer Zirkulation des erzielten Dampfes um den Becher (3) herum besteht.

3. Verfahren zur Herstellung von Joghurt nach Anspruch 1, **dadurch gekennzeichnet, dass** die erste Phase aus einer intensiven Erhitzung eines Flüssigkeitsbades, das sich in dem Raum (55) befindet, bis zu einer Temperatur über 50 °C, jedoch unter der Verdampfungstemperatur der genannten Flüssigkeit besteht.

4. Verfahren zur Herstellung von Joghurt nach einem der Ansprüche 1 bis 3, **dadurch gekennzeichnet, dass** es eine zweite Phase mit einer Dauer von maximal vier Stunden zur Regulierung der Temperatur der Zubereitung auf Milchbasis in dem Temperaturbereich für die Herstellung von Joghurt umfasst.

5. Verfahren zur Herstellung von Joghurt nach einem der Ansprüche 1 bis 4, **dadurch gekennzeichnet, dass** der Temperaturbereich für die Herstellung von Joghurt zwischen 37 und 52 °C und vorzugsweise zwischen 40 und 50 °C liegt.

6. Elektrischer Joghurtbereiter für Haushaltszwecke mit mindestens einem Stellplatz (28; 58) für einen Becher (3; 33), der eine Zubereitung auf Milchbasis enthält, einem Behälter (14; 44) zur Aufnahme einer Flüssigkeit und einer Heizvorrichtung (15; 45), die zum Erhitzen der in dem Behälter (14; 44) enthaltenen Flüssigkeit vorgesehen ist, wobei der genannte Becher (3; 33) zumindest teilweise in einem abgeschlossenen Raum (25; 55) angeordnet ist und wobei der Behälter (14; 44) mit dem Raum (25; 55) verbunden ist, **dadurch gekennzeichnet, dass** der in dem Stellplatz (28; 58) angeordnete Becher (3; 33) von der in dem Behälter (14; 44) befindlichen Flüssigkeit entfernt angeordnet ist und dass die Heizvorrichtung (15; 45) eine Heizleistung auf die Flüssigkeit übertragen kann, durch die in einer Zeitdauer von maximal dreißig Minuten die Temperatur der genannten Zubereitung auf Milchbasis durch Wärmetransfer auf einen Temperaturbereich für die Herstellung von Joghurt erhöht werden kann.

7. Elektrischer Joghurtbereiter für Haushaltszwecke nach Anspruch 6, **dadurch gekennzeichnet, dass** er einen Korb (5; 35) umfasst, der den genannten zumindest einen Stellplatz (28; 58) umfasst.

8. Elektrischer Joghurtbereiter für Haushaltszwecke nach Anspruch 7, **dadurch gekennzeichnet, dass** der Korb (5) im Innern des abgeschlossenen Raums (25) angeordnet ist.

9. Elektrischer Joghurtbereiter für Haushaltszwecke nach Anspruch 7, **dadurch gekennzeichnet, dass** der Korb (35) zumindest eine Öffnung (38) aufweist, durch die sich der zumindest eine Stellplatz (58) bilden lässt, der für die Aufnahme des genannten Bechers (33) vorgesehen ist, und dass der Raum (55) im oberen Teil durch den genannten Korb (35) begrenzt ist.

10. Elektrischer Joghurtbereiter für Haushaltszwecke nach Anspruch 9, **dadurch gekennzeichnet, dass** der Becher (33) im oberen Teil auf Höhe der genannten Öffnung (38) derart zurückgehalten wird, dass sich der größte Teil des Bechers (33) in dem abgeschlossenen Raum (55) unter dem Korb (35) befindet.

11. Elektrischer Joghurtbereiter für Haushaltszwecke nach einem der Ansprüche 6 bis 10, **dadurch gekennzeichnet, dass** es die Heizvorrichtung (15) gestattet, das in dem Behälter (14) befindliche Wasser in einem Zeitraum von maximal dreißig Minuten und vorzugsweise maximal zehn Minuten zu verdampfen.

12. Elektrischer Joghurtbereiter für Haushaltszwecke nach Anspruch 11, **dadurch gekennzeichnet, dass** der Behälter (14) und die Heizvorrichtung (15) im zentralen Teil eines Bodens (16) des abgeschlossenen Raums (25) angeordnet sind, dass der Behälter (14) durch eine zentrale Vertiefung des Bodens (16) gebildet wird, dass sich die Heizvorrichtung (15) in der genannten zentralen Vertiefung befindet, dass die zentrale Vertiefung von einem ringförmigen Bereich des Bodens (16) umgeben ist, der von dem Behälter (14) durch eine Stufe (21) getrennt ist, und dass der genannte ringförmige Bereich des Bodens (16) in Richtung des Außenrands schräg abfällt.

13. Elektrischer Joghurtbereiter für Haushaltszwecke nach einem der Ansprüche 6 bis 10, **dadurch gekennzeichnet, dass** der abgeschlossene Raum (55) einen unteren Teil aufweist, der einen Topf (32) umfasst, der den Behälter (44) bildet, und dass die Heizvorrichtung (45) den Topf (32) erhitzen kann.

14. Elektrischer Joghurtbereiter für Haushaltszwecke nach einem der Ansprüche 6 bis 13, **dadurch gekennzeichnet, dass** der Temperaturbereich für die Herstellung von Joghurt zwischen 37 und 52 °C und vorzugsweise zwischen 40 und 50 °C liegt.

15. Elektrischer Joghurtbereiter für Haushaltszwecke nach einem der Ansprüche 6 bis 14, **dadurch gekennzeichnet, dass** die Heizvorrichtung (15; 45) eine Leistung von mindestens 150 W aufweist.

## Claims

1. Method for producing yoghurt from a pot (3; 33) containing a milk-based preparation, comprising a step of heating the pot (3; 33) arranged at least partially in a chamber (25; 55), **characterised in that** the step of heating the pot (3; 33) comprises a first phase of time less than or equal to thirty minutes consisting in heating a liquid placed in the chamber (25; 55) near the pot (3; 33) so as to raise the temperature of said milk-based preparation within a yoghurt production temperature range, **in that** the process consists in arranging the pot (3; 33) separate from the liquid, and **in that** said first phase consists in raising the temperature of a gaseous fluid in contact with the pot (3; 33) by heating said liquid.

2. Method for producing yoghurt according to claim 1, **characterised in that** the first phase consists in evaporating in the chamber (25) a predefined quantity of water and in circulating the steam obtained around the pot (3).

3. Method for producing yoghurt according to claim 1, **characterised in that** the first phase consists in intensive heating of a liquid bath placed in the chamber (55) up to a temperature greater than 50 °C but less than the evaporation temperature of said liquid.

4. Method for producing yoghurt according to one of claims 1 to 3, **characterised in that** it comprises a second phase of time less than or equal to four hours for regulating the temperature of the milk-based preparation in the yoghurt production temperature range.

5. Method for producing yoghurt according to one of claims 1 to 4, **characterised in that** the yoghurt production temperature range is between 37 °C and 52 °C and preferably between 40 °C and 50 °C.

6. Electric household yoghurt maker comprising at least one location (28; 58) for a pot (3; 33) containing a milk-based preparation, a tank (14; 44) to receive a liquid and a heating means (15; 45) designed to heat the liquid contained in the tank (14; 44), said pot (3; 33) being arranged at least partially in a chamber (25; 55), the tank (14; 44) communicating with the chamber (25; 55), **characterised in that** the pot (3; 33) placed in the location (28; 58) is arranged separately from the liquid placed in the tank (14; 44) and **in that** the heating means (15; 45) is adapted to transmit a heating power to the liquid in order to raise the temperature of said milk-based preparation by heat transfer within a yoghurt production temperature range within a time of less than or equal to thirty minutes.

7. Electric household yoghurt maker according to claim 6, **characterised in that** it comprises a basket (5; 35) comprising said at least one location (28; 58).

8. Electric household yoghurt maker according to claim 7, **characterised in that** the basket (5) is arranged inside the chamber (25).

9. Electric household yoghurt maker according to claim 7, **characterised in that** the basket (35) comprises at least one opening (38) for forming said at least one location (58) designed to receive said pot (33) and **in that** the chamber (55) is delimited in its upper part by said basket (35).

10. Electric household yoghurt maker according to claim 9, **characterised in that** the pot (33) is held in its upper part at said opening (38) so that the larger part of the pot (33) is inside the chamber (55) under the basket (35).

11. Electric household yoghurt maker according to one of claims 6 to 10, **characterised in that** the heating means (15) can evaporate the water contained in the tank (14) within a time of less than or equal to thirty minutes, and preferably less than or equal to ten minutes.

12. Electric household yoghurt maker according to claim 11, **characterised in that** the tank (14) and the heating means (15) are arranged in the central part of a bottom (16) of the chamber (25), **in that** the tank (14) is formed by a central depression in the bottom (16), **in that** the heating means (15) is housed in said central depression, **in that** that the central depression is surrounded by an annular region of the bottom (16) separated from the tank (14) by a threshold (21), and **in that** said annular region of the bottom (16) is inclined downwards towards the periphery

13. Electric household yoghurt maker according to one of claims 6 to 10, **characterised in that** the chamber (55) has a lower part comprising a vessel (32) forming the tank (44) and **in that** the heating means (45) is adapted to heat the vessel (32).

14. Electric household yoghurt maker according to one of claims 6 to 13, **characterised in that** the yoghurt production temperature range is between 37 °C and 52 °C, and preferably between 40 °C and 50 °C

15. Electric household yoghurt maker according to one of claims 6 to 14, **characterised in that** the power of the heating means (15; 45) is greater than or equal to 150 W.
